# EUROPÄISCHE PATENTSCHRIFT

(11) **EP 3 899 577 B1**
(45) Veröffentlichungstag und Bekanntmachung des Hinweises auf die Patenterteilung: **27.05.2026**
(21) Anmeldenummer: 19828658.5
(22) Anmeldetag: 16.12.2019
(51) Int. Cl.: G01S 7/497, G01S 7/484, H05B 45/14

(54) **EINRICHTUNG ZUM BETREIBEN EINER LICHTQUELLE ZUR OPTISCHEN LAUFZEITMESSUNG**
DEVICE FOR OPERATING A LIGHT SOURCE FOR THE PURPOSE OF OPTICAL TIME-OF-FLIGHT MEASUREMENT
DISPOSITIF POUR FAIRE FONCTIONNER UNE SOURCE LUMINEUSE SERVANT À LA MESURE OPTIQUE DE TEMPS DE PROPAGATION

(30) Priorität: 18.12.2018 DE 102018222049
(43) Veröffentlichungstag der Anmeldung: 27.10.2021
(73) Patentinhaber: MicroVision, Inc., Redmond, WA 98052 (US)
(72) Erfinder: BEUSCHEL, Ralf, 88239 Wangen (DE)
(74) Vertreter: RGTH
(86) Internationale Anmeldenummer: PCT/EP2019/085302
(87) Internationale Veröffentlichungsnummer: WO 2020/127013

(56) Entgegenhaltungen:
- WO-A1-2018/050897
- JP-A- H08 170 987
- US-A1- 2005 201 435
- US-B2- 8 497 478

## Beschreibung

Die vorliegende Erfindung betrifft allgemein eine Einrichtung zum Betreiben einer Lichtquelle zur optischen Laufzeitmessung.

Allgemein sind verschiedene Verfahren zur optischen Laufzeitmessung bekannt, die auf dem sogenannten Time-of-Flight Prinzip beruhen können, bei dem die Laufzeit eines ausgesendeten und von einem Objekt reflektierten Lichtsignals gemessen wird, um die Distanz zu dem Objekt auf Grundlage der Laufzeit zu bestimmen.

Insbesondere im Kraftfahrzeugumfeld werden Sensoren eingesetzt, die auf dem sogenannten LIDAR-Prinzip beruhen (Light Detection and Ranging), bei dem zum Abtasten der Umgebung periodisch Pulse ausgesendet und die reflektierten Pulse detektiert werden. Ein entsprechendes Verfahren und eine Vorrichtung sind beispielsweise aus WO 2017/081294 bekannt.

US 8,497,478 B2 beschreibt eine Hochspannungsversorgungsschaltung zum Ansteuern einer Lichtquelle in einem optischen Sensorsystem.

WO 2018/050897 A1 beschreibt eine elektronische Schaltung für einen Time-of-Flight Sensor.

US 2005/0201435 A1 offenbart eine Objekterfassungseinheit.

Auch wenn aus dem Stand der Technik Lösungen für die optische Distanzmessung bekannt sind, ist eine Aufgabe der vorliegenden Erfindung eine Einrichtung zum Betreiben einer Lichtquelle zur optischen Laufzeitmessung bereitzustellen.

Diese Aufgabe löst die Einrichtung nach Anspruch 1.

Gemäß einem ersten Aspekt stellt die vorliegende Erfindung eine Einrichtung zum Betreiben einer Lichtquelle zur optischen Laufzeitmessung bereit, umfassend:
eine Lichtquelle, die dazu eingerichtet ist, Lichtpulse gemäß einer Pulssignalsequenz zu emittieren; und
eine Überwachungsschaltung zum Überwachen einer von der Lichtquelle emittierten Lichtleistung basierend auf einem Stromsignal und/oder Spannungssignal der Lichtquelle.

Wie erwähnt, betreffen Ausführungsbeispiele eine Einrichtung zum Betreiben einer Lichtquelle zur optischen Laufzeitmessung, umfassend:
eine Lichtquelle, die dazu eingerichtet ist, Lichtpulse gemäß einer Pulssignalsequenz zu emittieren; und
eine Überwachungsschaltung zum Überwachen einer von der Lichtquelle emittierten Lichtleistung basierend auf einem Stromsignal und/oder Spannungssignal der Lichtquelle.

Die Einrichtung kann allgemein in einem LIDAR-System oder dergleichen verwendet werden und bspw. im Kraftfahrzeugumfeld eingesetzt werden, ohne dass die vorliegende Erfindung auf diese Fälle beschränkt ist. Folglich umfasst bei manchen Ausführungsbeispielen die Einrichtung auch einen entsprechenden Detektor oder Sensor, zum Beispiel auf der SPAD (Single Avalanche Photo Diode) Technologie basierend, CAPD (Current Assisted Photo Diode) Technologie, CMOS (Complementary Metal Oxide Semiconductor) Technologie oder dergleichen, zum Detektieren von Lichtpulsen, die von der Lichtquelle emittiert und von einem Objekt reflektiert werden. Ferner kann die Einrichtung entsprechend dazu eingerichtet sein, die Laufzeit der emittierten Lichtpulse zu ermitteln und darauf basierend bspw. die Distanz zwischen der Einrichtung und dem Objekt, eine dreidimensionale Abbildung des Objekts oder dergleichen zu ermitteln.

Die Lichtquelle kann ein oder mehrere Laserelemente umfassen, bspw. Laserdioden, VCSEL (Vertical Surface Emitting Laser) oder dergleichen oder kann auch auf LED (Light Emitting Diode) Technologie oder dergleichen basieren.

Bei manchen Ausführungsbeispielen soll die Lichtquelle sicher für die Augen sein ("eye safe"), wie es für manche Lichtquellen, insbesondere Laser auch vorgeschrieben sein kann. Zum Beispiel kann die Augensicherheit vorschreiben, dass die emittierte Durchschnittsleistung bei unterschiedlichen Zeitskalen, wie einer Millisekunde, oder zehn Sekunden oder dergleichen bestimmte Werte nicht überschreiten darf.

Erfindungsgemäß überwacht die Überwachungsschaltung die von der Lichtquelle emittierte Lichtleistung, wobei die Lichtquelle bei Ausführungsbeispielen bspw. deaktiviert oder gar nicht erst aktiviert wird, wenn die emittierte Lichtleistung einen Schwellwert überschreitet, bei dem bspw. die Augensicherheit nicht mehr gewährleistet ist.

Da die Lichtquelle Lichtpulse aussendet, ist es bei manchen Ausführungsbeispielen erforderlich, die emittierte Lichtenergie zu integrieren bzw. aufzusummieren, um die emittierte Lichtleistung zu überwachen.

Dementsprechend ist es bei manchen Ausführungsbeispielen erforderlich, nicht nur die An-Zeit der Lichtquelle zu überwachen, sondern (auch) den Strom bzw. die Spannung, welche die Lichtquelle benötigt, um betrieben zu werden.

Bei manchen Ausführungsbeispielen sind die Strompulse, mit denen die Lichtquelle basierend auf der Pulssequenz betrieben wird (z. B. eine Laserdiode), in einem Bereich von 2 bis 10 Nanosekunden lang, ohne die vorliegende Erfindung darauf zu beschränken. Entsprechend wurde auch erkannt, dass ein herkömmlicher Analog-Digitalwandler oder -umsetzer in einem Bereich von 1 GHz bis 5 GHz benötigt würde, um das Stromsignal zu digitalisieren, wobei solche Wandler typischerweise teuer sind und eine hohe Leistung benötigen (z. B. größer 500 Milli-watt, also 0,5 Watt), sodass bei manchen Ausführungsbeispielen andere Mittel zum Einsatz kommen, wie auch weiter unten erläutert wird.

Bei manchen Ausführungsbeispielen basiert die Bestimmung der Distanz auf dem sogenannten TCSPC (time correlated single photon couting) Messprinzip, insbesondere bei Ausführungsbeispielen, welche auf LIDAR basieren.

Die Lichtquelle kann bei manchen Ausführungsbeispielen Lichtpulse periodisch emittieren, bspw. bei einer hohen Frequenz von alle zwei Mikrosekunden in einem 300 Meter Bereich, ohne die vorliegende Erfindung auf dieses spezifische Beispiel zu beschränken.

Die Einrichtung kann einen (Start-)Pulsgenerator zum Erzeugen eines Pulssignals umfassen, wobei das Pulssignal als Startpuls für die Messungen dienen kann und auch als Basis für die Erzeugung der Pulssignalsequenz.

Wie erwähnt können Lichtpulse eine Länge von fünf bis zwanzig Nanosekunden für die Messung haben und bei manchen Ausführungsbeispielen repräsentiert die Pulssequenz eine Bitsequenz, z. B. eine 16 Bit Pseudo-Random Bitsequenz, sodass bspw. eine Pulssequenz mit einer Länge von fünf Nanosekunden 16 Bits repräsentiert, wobei bspw. jeder Bit mit dem Wert "1" bedeutet, dass die Lichtquelle aktiv ist und "0", dass die Lichtquelle inaktiv ist (oder umgekehrt).

Bei manchen Ausführungsbeispielen umfasst die Überwachungsschaltung einen An-Zeit-Monitor, der dazu eingerichtet ist, zu überwachen, ob die durchgehende Einschaltzeit der Lichtquelle kleiner als ein vorgegebener Einschaltzeit-Schwellwert ist. Dazu kann der An-Zeit-Monitor bspw. ein Spannungssignal der Lichtquelle analysieren, welches einen bestimmten Wert hat, wenn die Lichtquelle aktiv ist und keinen oder einen niedrigeren Wert, wenn die Lichtquelle nicht aktiv ist. Die Einschaltzeit kann proportional zur abgegebenen Lichtenergie bzw. Lichtleistung sein.

Bei manchen Ausführungsbeispielen umfasst die Überwachungsschaltung einen Tastverhältnis-Monitor, der dazu eingerichtet ist, zu überwachen, ob ein Tastverhältnis der Lichtpulse (z. B. basierend auf dem Pulssignal und dem Strom-/Spannungssignal) kleiner als ein vorgegebener Tastverhältnis-Schwellwert ist. Der Tastverhältnis-Monitor kann bspw. einen Pulszug von Lichtpulsen, der basierend auf der Pulssequenz entsteht, anhand des Strom-/Spannungssignals so integrieren, dass alle aktiven Lichtpulse des Pulszuges berücksichtigt werden. Dies kann dadurch geschehen, dass alle Bits der Pulssequenz ermittelt werden, bei denen die Lichtquelle aktiv ist (z. B. alle Bits mit dem Wert "1" oder "0"). Der Tastverhältnis-Schwellwert kann bspw. so gewählt werden, dass er vorgibt, dass die Lichtquelle für nicht mehr als 8 Bit-Perioden (z. B. 80 ns) aktiv war.

Bei manchen Ausführungsbeispielen umfasst die Überwachungsschaltung einen Fenster-Monitor, der dazu eingerichtet ist, zu überwachen, ob die Lichtquelle außerhalb der Pulssequenz aktiviert ist. Damit kann bspw. eine Fehlfunktion der Lichtquelle erkannt werden, wenn z. B. die Lichtquelle nicht deaktiviert wird nach der Pulssequenz oder nicht mehr korrekt auf sie reagiert.

Bei manchen Ausführungsbeispielen umfasst die Einrichtung einen Pulssequenzgenerator, der dazu eingerichtet ist, die Pulssignalsequenz, z. B. basierend auf dem Pulssignal, zu generieren.

Die Einrichtung kann auch weiter einen Pulsfenstergenerator umfassen, der basierend auf dem Pulssignal ein Pulsfenster generiert, wobei bspw. bei Empfang des Pulssignals der Start des Pulsfensters generiert wird und nach Ablauf des Pulszuges das Ende des Pulsfensters generiert wird. Das Pulsfenster selbst kann bspw. durch ein entsprechendes Signal repräsentiert werden und stellt die aktive Zeit der Lichtquelle dar (bezogen auf einen Pulszug).

Erfindungsgemäß umfasst die die Überwachungsschaltung einen ersten Umsetzer zum zeitkorrelierten Abtasten des Stromsignals von der Lichtquelle (und zum Ausgeben eines entsprechenden abgetasteten und digitalisierten Stromsignals).

Schnelle Zeit-zu-Digital-Umsetzer sind grundsätzlich bekannt und können bspw. eine Zeitauflösung von besser als 500 Pikosekunden haben.

Dadurch kann das Stromsignal von der Lichtquelle kostengünstig und mit hoher Zeitauflösung digitalisiert werden.

Erfindungsgemäß umfasst die Überwachungsschaltung einen zweiten Umsetzer zum zeitkorrelierten Abtasten des Spannungssignals von der Lichtquelle (und zum Ausgeben eines entsprechenden abgetasteten und digitalisierten Spannungssignals).

Dabei kann die analoge Wellenform des Stromsignals bzw. des Spannungssignals sequentiell abgetastet werden, da es bei manchen Ausführungsbeispielen synchron und periodisch zu dem TCSPC Messzyklus ist.

Bei manchen Ausführungsbeispielen umfasst die Überwachungsschaltung einen Energieberechner, der dazu eingerichtet ist, basierend auf dem Stromsignal und/oder Spannungssignal der Lichtquelle einen elektrischen Energiewert und darauf basierend eine gesamte Lichtleistung oder Pulsenergie zu berechnen (z. B. basierend auf dem Strom- bzw. Spannungssignal welche von dem ersten bzw. zweiten Umsetzer abgetastet wurden). Der Energieberechner kann bspw. einfach die Energie durch die Multiplikation des Spannungswerts U mit dem Stromwert I berechnen, wobei der Stromwert I durch Integration des von dem ersten Umsetzer stammenden Stromsignals ermittelt wird und wobei der Spannungswert U entweder ein modellbasierter Wert sein kann (bspw. aufgrund eines linearen Zusammenhangs mit dem Stromwert I ermittelt oder aufgrund einer monoton steigenden Funktion ermittelt, die eine eindeutige Funktion für den Zusammenhang zwischen Spannungswert U und Stromwert I darstellt), eine vorgegebene Konstante sein kann oder durch Integration des von dem zweiten Umsetzer stammenden Spannungssignals ermittelt sein kann.

Bei manchen Ausführungsbeispielen umfasst die Einrichtung weiter einen Temperaturkompensator, der dazu eingerichtet ist, die emittierte Lichtleistung basierend auf dem elektrischen Energiewert und einem Betriebstemperaturwert der Lichtquelle zu korrigieren. Generell kann die abgegebene Lichtleistung mit der Temperatur korrelieren, wobei bspw. die Effizienz mit der Erhöhung der Temperatur fällt, sodass ein höherer Strom, der durch die Lichtquelle fließt, nicht unbedingt mit einer höheren emittierten optischen Energie einhergehen muss. Mit anderen Worten kann die benötigte elektrische Energie in Korrelation mit der Temperaturerhöhung steigen, die für die gleiche abgegebene Lichtenergie benötigt wird. Diesen Effekt kann der Temperaturkompensator berücksichtigen, indem er bspw. eine Lichtleistung, die auf Grundlage des Strom- und/oder Spannungssignals erfolgt, entsprechend der aktuellen Temperatur korrigiert oder indem er einen Referenzwert korrigiert, mit dem bspw. die von dem Energieberechner ermittelten elektrischen Energie verglichen wird.

Dementsprechend umfasst bei manchen Ausführungsbeispielen die Lichtquelle einen Temperatursensor, der den Betriebstemperaturwert der Lichtquelle an den Temperaturkompensator ausgibt.

Bei manchen Ausführungsbeispielen umfasst die Einrichtung einen Messwiderstand (z. B. Shunt-Widerstand), der ein Spannungsabtastsignal basierend auf einem Stromsignal der Lichtquelle ausgibt. Ferner kann ein Differenzverstärker vorgesehen sein, der das Spannungsabtastsignal des Messwiderstands verstärkt. Außerdem kann die Einrichtung einen Komparator umfassen, der das Spannungsabtastsignal mit einem Referenzwert vergleicht und darauf basierend ein Statussignal der Lichtquelle an die Überwachungsschaltung ausgibt. Das Statussignal kann bspw. ein "Lichtquelle an"-Signal sein, das signalisiert, dass die Lichtquelle aktiv ist.

Bei manchen Ausführungsbeispielen umfasst die Überwachungsschaltung eine Fehler-Logik, die dazu eingerichtet ist, basierend auf der Überwachung der von der Lichtquelle emittierten Lichtleistung die Lichtquelle zu deaktivieren.

Die hierin diskutierte Einrichtung kann in einer Laufzeit-Messeinrichtung integriert sein, wie z. B. einer LIDAR Messeinrichtung, die wiederum in einem Kraftfahrzeug oder einer anderen Vorrichtung integriert oder vorgesehen sein kann. Die beschriebene Einrichtung kann auch Einsatz in einem autonom betriebenen (Kraft-)Fahrzeug finden.

Die oben bzw. hierin erläuterten Verfahrensschritte können auch Gegenstand eines Verfahrens zum Betreiben einer Lichtquelle zur Laufzeitmessung (bzw. zum Betreiben einer LIDAR-Messeinrichtung oder dergleichen) sein, das bspw. von einer hierin beschriebenen Einrichtung ausgeführt wird.

Bei manchen Ausführungsbeispielen wird zusammenfassend entsprechend eine Überwachung kritischer Parameter der Augensicherheit bereitgestellt. Die Lichtquelle kann durch ein entsprechendes Signal abgeschaltet werden, wenn eine Verletzung eines Parameters, der für die Augensicherheit relevant ist, erkannt wird. Ferner kann ein Startpulssignal verwendet werden, um die An-Zeit der Lichtquelle (z. B. des Lasers) zu überwachen. Bei manchen Ausführungsbeispielen wird die Lichtquelle abgeschaltet, wenn eine Einschalt-Zeit ("t_on_max" von z. B. sieben oder fünf Nanosekunden Pulsen) überschritten wird. Die Lichtquelle kann auch abgeschaltet werden, wenn sie außerhalb des Pulsfensters aktiv ist und/oder wenn eine Pulssequenz einen Tastverhältnis-Schwellwert übersteigt. Bei manchen Ausführungsbeispielen wird auch der Durchschnitts- und der Spitzenstromwert der Lichtquelle überwacht, bspw. auf Grundlage eines TDC Schaltkreises unter Verwendung eines Histogramms, wobei Stromwerte in ein Histogramm gefüllt werden, um einen entsprechenden zeitbasierten Stromwertverlauf zu erhalten.

Ausführungsbeispiele werden nun beispielhaft und unter Bezugnahme auf die beigefügte Zeichnung beschrieben, wobei das erste Ausführungsbeispiel nicht durch die Ansprüche abgedeckt ist, sondern zum besseren Verständnis der Erfindung dient, und das zweite Ausführungsbeispiel gemäß der Erfindung ist, in der:
Fig. 1 ein erstes Ausführungsbeispiel einer Einrichtung zum Betreiben einer Lichtquelle zur optischen Laufzeitmessung veranschaulicht; und
Fig. 2 ein zweites Ausführungsbeispiel einer Einrichtung zum Betreiben einer Lichtquelle zur optischen Laufzeitmessung veranschaulicht.

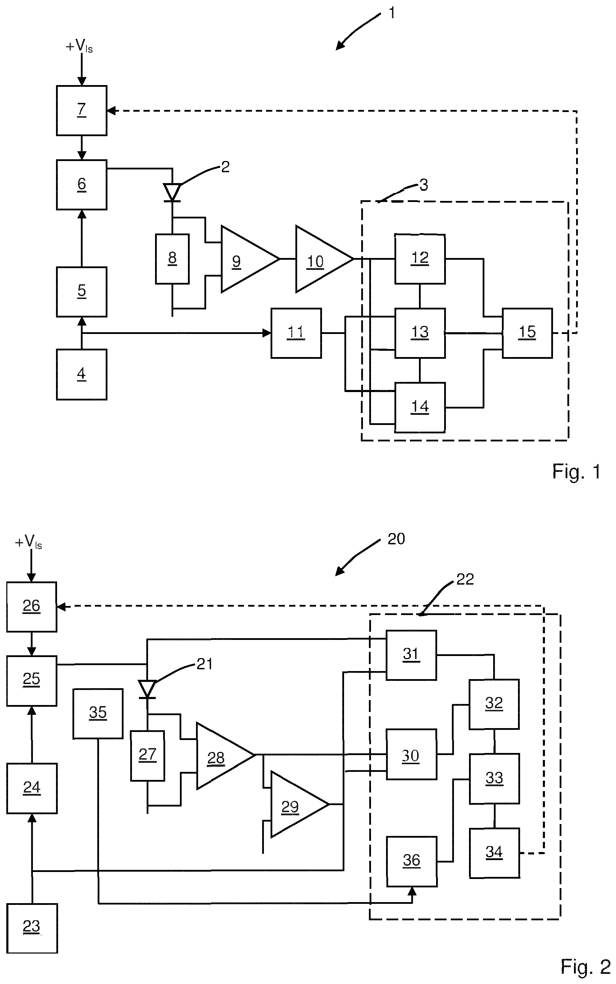

Fig. 1 veranschaulicht ein Schaltschema eines ersten Ausführungsbeispiels einer Einrichtung 1 zum Betreiben einer Laserdiode 2 zur optischen Laufzeitmessung mit einer Überwachungsschaltung 3 zum Überwachen der Augensicherheit des Betriebs der Laserdiode 2.

Ein Startpulsgenerator 4 der Einrichtung 1 gibt periodische Triggersignale aus, um eine LIDAR Pulsmessung zu starten, z. B. eine einzelne Messung innerhalb eines TCSPC Zyklus.

Die periodischen Triggersignale oder Pulssignale werden von einem Pulssequenzgenerator 5 empfangen, der in Reaktion darauf eine Pulssequenz generiert, indem er die periodischen Pulssignale in die Pulssequenz transformiert, die bspw. eine 16 BitSequenz von "0" und "1" sein kann, wobei eine "1" ein Einschalten oder Aktivieren des Lasers (Laserdiode) 2 verursacht, sodass der Laser 2 Lichtpulse gemäß der Pulssequenz emittiert. Die Pulssequenz ist mit einer 10 ns Bit-Periode serialisiert. Im vorliegenden Ausführungsbeispiel beträgt die Länge eines Pulszuges von Lichtsignalen 160 ns.

Der Pulszug kann grundsätzlich jede beliebige Kombination aus "1" und "0" haben mit einer gewissen Randbedingung für die "1", da diese die An-Zeit des Lasers 2 bestimmt, sodass die Gesamtanzahl von "1" zusammen mit der Pulsfrequenz die durchschnittliche Laserleistung definiert. Bei anderen Ausführungsbeispielen kann der Pulszug auch nur einen einzelnen Lichtpuls aufweisen.

Der Pulssequenzgenerator 5 gibt die Pulssequenz an einen Lasertreiber 6 aus, der die Pulssequenz in Hoch-Stromsignale zum Betreiben der Laserdiode 2 umwandelt.

Der Lasertreiber 6 ist mit einem Laserschalter 7 verbunden, an dem eine Laserversorgungsspannung +Vₗₛ anliegt, die, wenn der Laserschalter 7 eingeschaltet ist, an den Lasertreiber 6 geliefert wird.

Der Laserschalter 7 kann die Laserdiode 2 abschalten, wenn bspw. der Lasertreiber 6 eine Fehlfunktion hat, defekt ist oder eine Kurzschlusssituation eintritt, welche die Laserdiode 2 permanent Licht(pulse) emittieren lässt, was kritisch in Bezug auf die Augensicherheit wäre, und er stellt außerdem einen redundanten Steuerpfad dar, da neben dem Lasertreiber 6 auch der Laserschalter 7 die Laserdiode abschalten kann. Außerdem kann der Laserschalter 7 von der Überwachungsschaltung 3 ein entsprechendes Abschaltsignal erhalten, wie auch noch weiter unten näher erläutert wird.

Der Strom, der durch die Laserdiode 2 fliest, wird durch den Spannungsabfall über einen Shunt-Widerstand 8 gemessen, der mit der Laserdiode 2 verbunden ist. Die abgetastete Spannung wird an einen Differenzverstärker 9 geliefert, der das kleine Abtastspannungssignal verstärkt und an einen Komparator 10 ausgibt.

Der Komparator 10 vergleicht das verstärkte Spannungsabtastsignal mit einem Referenzwert und gibt ein entsprechendes Laserstatus-Signal aus, welches angibt, ob die Laserdiode an ist (Spannungsabtastsignal größer als der Referenzwert) oder aus ist (Spannungsabtastsignal kleiner als der Referenzwert).

Das Signal, welches von dem Komparator 10 ausgegeben wird, ist im vorliegenden Ausführungsbeispiel ein Laser-an-Signal und die erste steigende Flanke dieses Signals kann verwendet werden, um die TDCs für die Time-of-Flight Messung zu starten.

Der Startpulsgenerator 4 liefert das Pulssignal auch an einen Pulsfenstergenerator 11, sodass der Startpulsgenerator 4 den Pulsfenstergenerator 11 triggert. Der Pulsfenstergenerator gibt ein Fenster-Signal aus, welches "hoch" gesetzt wird (Start des Fensters), sobald der Startpuls empfangen wurde und auf "tief" gesetzt wird (Ende des Fensters) nach der maximalen Zeit des Pulszuges, das heißt z. B. nach 160 ns, was der Länge des Pulszuges in diesem Ausführungsbeispiel entspricht.

Das Laser-an-Signal des Komparators 10 wird an die Überwachungsschaltung 3 geliefert, die drei Monitore hat, nämlich einen An-Zeit-Monitor 12, einen Tastverhältnis-Monitor 13 und einen Fenster-Monitor 14.

Der An-Zeit-Monitor 12 überprüft, ob die durchgehende Einschaltzeit der Laserdiode 2 (ohne Unterbrechung) nicht einen vordefinierten Einschaltzeit-Schwellwert überschreitet. Zum Beispiel darf hier die Laserdiode 2 nicht länger als für zwei aufeinanderfolgen Pulse, d. h. zwei aufeinanderfolgende "1" der Pulssequenz, aktiviert sein. Dementsprechend gibt der An-Zeit-Monitor 12 ein Fehlersignal an eine Fehler-Logik 15 aus, wenn die Einschaltzeit oder Aktivierungszeit in diesem Ausführungsbeispiel oberhalb eines Einschaltzeit-Schwellwerts von 22 ns liegt, wobei sich die 22 ns aus der Einschaltzeit von 20 ns für zwei Pulse mit einer hinzugefügten Toleranz von 2 ns ergibt.

Der Tastverhältnis-Monitor 13 akkumuliert oder integriert die An-Zeiten der Laserdiode 2 innerhalb der Periode, die durch das Pulszug-Fenster, geliefert von dem Pulsfenstergenerator 11, definiert ist. Der Tastverhältnis-Monitor 13 gibt in diesem Ausführungsbeispiel einen Fehler an die Fehler-Logik 15 aus, wenn die Laserdiode 2 für mehr als 8 Bit-Perioden (= 80 ns = Tastverhältnis-Schwellwert) innerhalb einer Pulssequenz aktiviert ist (ohne die vorliegende Erfindung auf dieses spezifische Beispiel zu beschränken).

Der Fenster-Monitor 14 überprüft, dass die Laserdiode 2 nicht außerhalb des Pulssequenz-Fensters (Fenster-Signal), welches von dem Pulsfenstergenerator 11 geliefert wird, betrieben wird bzw. aktiviert ist. Dadurch kann eine Fehlfunktion des Systems erkannt werden, wenn bspw. der Lasertreiber 6 eine Fehlfunktion hat, defekt ist oder dergleichen und bspw. am Ende einer Pulssequenz nicht abschaltet. Der Fenster-Monitor 14 gibt in diesem Fall ebenfalls ein Fehlersignal an die Fehler-Logik 15 aus.

Die Fehler-Logik 15 kombiniert die Fehlersignale, welche sie von den Monitoren 12 bis 14 erhält und im Falle eines Fehlers sendet sie ein entsprechendes Abschaltsignal an den Laserschalter 7, der in Reaktion des Abschaltsignals die Laserdiode 2 abschaltet. Außerdem kann die Fehler-Logik 15 auch einen entsprechenden Fehlerreport an eine übergeordnete Steuerung senden.

Fig. 2 veranschaulicht ein Schaltschema eines zweiten Ausführungsbeispiels einer Einrichtung 20 zum Betreiben einer Laserdiode 21 zur optischen Laufzeitmessung mit einer Überwachungsschaltung 22 zum Überwachen der Augensicherheit des Betriebs der Laserdiode 21.

Dieses Ausführungsbeispiel bezieht sich auf das TCSP LIDAR-Messprinzip und es werden wenigstens zwei Pulse oder Pulssequenzen ohne Veränderung hintereinander emittiert.

Ein Startpulsgenerator 23 der Einrichtung 20 gibt periodische Triggersignale aus, um eine LIDAR Pulsmessung zu starten, z. B. eine einzelne Messung innerhalb eines TCSPC Zyklus.

Die periodischen Triggersignale oder Pulssignale werden von einem Pulssequenzgenerator 24 empfangen, der in Reaktion darauf eine Pulssequenz generiert, indem er die periodischen Pulssignale in die Pulssequenz transformiert, die bspw. eine 16 BitSequenz von "0" und "1" sein kann, wobei eine "1" ein Einschalten oder Aktivieren des Lasers (Laserdiode) 21 verursacht, sodass der Laser 21 Lichtpulse gemäß der Pulssequenz emittiert. Die Pulssequenz ist mit einer 10 ns Bit-Periode serialisiert. Im vorliegenden Ausführungsbeispiel beträgt die Länge eines Pulszuges von Lichtsignalen 160 ns.

Der Pulszug kann grundsätzlich jede beliebige Kombination aus "1" und "0" haben mit einer gewissen Randbedingung für die "1", da diese die An-Zeit des Lasers 21 bestimmt, sodass die Gesamtanzahl von "1" zusammen mit der Pulsfrequenz die durchschnittliche Laserleistung definieren.

Der Pulssequenzgenerator 24 gibt die Pulssequenz an einen Lasertreiber 6 aus, der die Pulssequenz in Hoch-Signale (Stromsignale) zum Betreiben der Laserdiode 21 umwandelt.

Der Lasertreiber 25 ist mit einem Laserschalter 26 verbunden, an dem eine Laserversorgungsspannung +Vₗₛ anliegt, die, wenn der Laserschalter 26 eingeschaltet ist, an den Lasertreiber 25 geliefert wird.

Der Laserschalter 26 kann die Laserdiode 21 abschalten, wenn bspw. der Lasertreiber 25 eine Fehlfunktion hat, defekt ist oder eine Kurzschlusssituation eintritt, welche die Laserdiode 21 permanent Licht(pulse) emittieren lässt, was kritisch in Bezug auf die Augensicherheit wäre, und er stellt außerdem einen redundanten Steuerpfad dar, da neben dem Lasertreiber 25 auch der Laserschalter 26 die Laserdiode 21 abschalten kann. Außerdem kann der Laserschalter 26 von der Überwachungsschaltung 22 ein entsprechendes Abschaltsignal erhalten, wie auch noch weiter unten näher erläutert wird.

Der Strom, der durch die Laserdiode 21 fließt, wird durch den Spannungsabfall über einen Shunt-Widerstand 27 gemessen, der mit der Laserdiode 21 verbunden ist. Die abgetastete Spannung wird an einen Differenzverstärker 28 geliefert, der das kleine Abtastspannungssignal verstärkt und an einen Komparator 29 ausgibt.

Der Komparator 29 vergleicht das verstärkte Spannungsabtastsignal mit einem Referenzwert und gibt ein entsprechendes Laserstatus-Signal aus, welches angibt, ob die Laserdiode 21 an ist (Spannungsabtastsignal größer als der Referenzwert) oder aus ist (Spannungsabtastsignal kleiner als der Referenzwert).

Das Signal, welches von dem Komparator 29 ausgegeben wird, ist im vorliegenden Ausführungsbeispiel ein Laser-an-Signal und die erste steigende Flanke dieses Signals kann verwendet werden, um die TDCs für die Time-of-Flight Messung zu starten und auch, um die beiden TCADCs 30 und 31 (siehe auch weiter unten) der Überwachungsschaltung 22 zu starten. Alternativ kann auch der Startpuls des Startpulsgenerators 23 dafür verwendet werden, wobei das Ausgabesignal des Komparators 29 leicht verzögert ist und nicht durch Zittern ("jitter") vom Lasertreiber 25 beeinflusst ist. Die TCADCs 30 und 31 können beispielsweise so ausgestaltet sein, wie es in der deutschen Patentanmeldung Nr. 102018220688.0 offenbart ist.

Im vorliegenden Ausführungsbeispiel hat die Überwachungsschaltung einen ersten TCADC 30 (time correlated analog-to-digital converter), auch erster Umsetzer 30 genannt, und einen zweiten TCADC 31, auch zweiter Umsetzer 31 genannt.

Der erste TCADC 30 tastet das analoge Stromsignal, das von dem Differenzverstärker 28 geliefert wird, zeitkorreliert ab und stellt nach einem TCSPC-Zyklus z. B. hundert Puls-Wiederholungen ein abgetastetes Stromsignal für die weitere Verarbeitung zur Verfügung, das zu einem Energieberechner 32 geliefert wird.

Im vorliegenden Ausführungsbeispiel, tastet der zweite TCADC 31 das analoge Spannungssignal der "Hoch-Seite" der Laserdiode 21 zeitkorreliert ab und nach einem TCSPC-Zyklus oder z. B. hundert Puls-Wiederholungen stellt der zweite TCADC 31 ein abgetastetes Spannungssignal für die weitere Verarbeitung zur Verfügung, das ebenfalls zu dem Energieberechner 32 geliefert wird.

Der Energieberechner 32 berechnet, sobald verfügbar (z. B. nach hundert Puls-Wiederholungen), basierend auf dem digitalisierten Stromsignal von dem ersten TCADC 30 und dem digitalisierten Spannungssignal des zweiten TCADC 31 die gesamte Pulsenergie (gesamte elektrische Energie, die durch die Laserdiode 21 geflossen ist und einer emittierten Lichtleistung entspricht) durch Multiplizieren des Integrals über das Spannungssignal mit dem Integral über das Stromsignal.

Bei Ausführungsbeispielen, bei denen der zweite TCADC 31 nicht vorgesehen ist, kann der Spannungswert als Konstante angenommen werden oder bspw. über einen linearen (oder wie oben ausgeführt monotonen) Zusammenhang mit dem Stromsignal abgeleitet werden.

Der Wert der gesamten Pulsenergie (hier entsprechend die gesamte elektrische Energie) wird an einen Vergleicher 33 geliefert, der den Wert der gesamten Pulsenergie mit einem Referenzwert vergleicht und wenn der Referenzwert überschritten wird, ein entsprechendes Fehlersignal an eine Fehler-Logik 34 ausgibt, wobei die Fehler-Logik 34 in Reaktion auf das Fehler-Signal ein entsprechendes Abschaltsignal an den Laserschalter 26 ausgibt, der dann die Laserdiode 21 abschaltet. Die Fehler-Logik 34 kann dabei auch noch andere Fehlersignale empfangen.

Im vorliegenden Ausführungsbeispiel ist an der Laserdiode 21 ein Temperatursensor 35 vorgesehen, der die Betriebstemperatur der Laserdiode 21 ermittelt und ein entsprechendes Temperatursignal an einen Temperaturkompensator 36 der Überwachungsschaltung 22 liefert.

Der Temperaturkompensator 36 überwacht die Temperatur der Laserdiode 21 basierend auf dem empfangenen Temperatursignal. Die gemessene elektrische Energie (durch die Abtastung der TCADCS 30 und 31 und berechnet durch den Energieberechner 32), welche von der Laserdiode 21 verbraucht wird, ist mit der emittierten Lichtleistung über die optische Effizienz der Laserdiode 21 verknüpft, wobei die Effizienz oder der Wirkungsgrad der Laserdiode 21 temperaturabhängig ist, sodass sich die Effizienz mit steigender Temperatur verringert, insbesondere bei einer Temperatur von über 60 °C bei diesem Ausführungsbeispiel.

Für die Augensicherheit ist allerdings nicht die emittierte Lichtenergie bzw. Lichtleistung relevant, sodass bei hohen Betriebstemperaturen der Laserdiode 21 auch die elektrische Energie erhöht sein kann, ohne dass die emittierte Lichtleistung in Bezug auf die Augensicherheit zu hoch wäre.

Der Temperaturkompensator 36 hat in seinem Speicher einen Zusammenhang zwischen der emittierten optischen Lichtleistung und der Betriebstemperatur gespeichert und kann durch Kommunikation mit dem Vergleicher 33 den dort abgelegten Referenzwert basierend auf der aktuellen Betriebstemperatur entsprechend anpassen, sodass bei höheren Betriebstemperaturen der Referenzwert für die zulässige Pulsenergie (die auf der elektrischen Energie beruht, wie oben ausgeführt wurde) entsprechend erhöht wird.

### Bezugszeichen

- 1: Einrichtung zum Betreiben einer Laserdiode zur optischen Laufzeitmessung
- 2: Laserdiode (Lichtquelle)
- 3: Überwachungsschaltung
- 4: Startpulsgenerator
- 5: Pulssequenzgenerator
- 6: Lasertreiber
- 7: Laserschalter
- 8: Shunt-Widerstand (Messwiderstand)
- 9: Differenzverstärke
- 10: Komparator
- 11: Pulsfenstergenerator
- 12: An-Zeit-Monitor
- 13: Tastverhältnis-Monitor
- 14: Fenster-Monitor
- 15: Fehler-Logik
- 20: Einrichtung zum Betreiben einer Laserdiode zur optischen Laufzeitmessung
- 21: Laserdiode (Lichtquelle)
- 22: Überwachungsschaltung
- 23: Startpulsgenerator
- 24: Pulssequenzgenerator
- 25: Lasertreiber
- 26: Laserschalter
- 27: Shunt-Widerstand (Messwiderstand)
- 28: Differenzverstärke
- 29: Komparator
- 30: erster TCADC (Umsetzer)
- 31: zweiter TCADC (Umsetzer)
- 32: Energieberechner
- 33: Vergleicher
- 34: Fehler-Logik
- 35: Temperatursensor
- 36: Temperaturkompensator

## Patentansprüche

1. Einrichtung (1, 20) zum Betreiben einer Lichtquelle (2, 21) zur optischen Laufzeitmessung, umfassend:
eine Lichtquelle (2, 21), die dazu eingerichtet ist, Lichtpulse gemäß einer Pulssignalsequenz zu emittieren; und
eine Überwachungsschaltung (3, 22) zum Überwachen einer von der Lichtquelle (2, 21) emittierten Lichtleistung basierend auf einem Stromsignal und/oder Spannungssignal der Lichtquelle (2, 21),
wobei die Überwachungsschaltung (3, 22) dazu ausgebildet ist, die Lichtquelle (2, 21) zu deaktivieren oder nicht zu aktivieren, wenn die emittierte Lichtleistung einen Schwellwert überschreitet,
**dadurch gekennzeichnet, dass**
die Überwachungsschaltung (22) einen ersten Umsetzer (30) zum zeitkorrelierten Abtasten des Stromsignals von der Lichtquelle (21) und einen zweiten Umsetzer (31) zum zeitkorrelierten Abtasten des Spannungssignals von der Lichtquelle (21) umfasst.

2. Einrichtung nach Anspruch 1, **dadurch gekennzeichnet, dass** die Überwachungsschaltung (3) einen An-Zeit-Monitor (12) umfasst, der dazu eingerichtet ist, zu überwachen, ob die durchgehende Einschaltzeit der Lichtquelle (2) kleiner als ein vorgegebener Einschaltzeit-Schwellwert ist.

3. Einrichtung nach Anspruch 1 oder 2, **dadurch gekennzeichnet, dass** die Überwachungsschaltung (3) einen Tastverhältnis-Monitor (13) umfasst, der dazu eingerichtet ist, zu überwachen, ob ein Tastverhältnis der Lichtpulse kleiner als ein vorgegebener Tastverhältnis-Schwellwert ist.

4. Einrichtung nach einem der vorhergehenden Ansprüche, **dadurch gekennzeichnet, dass** die Überwachungsschaltung (3) einen Fenster-Monitor (14) umfasst, der dazu eingerichtet ist, zu überwachen, ob die Lichtquelle (2) außerhalb der Pulssequenz aktiviert ist.

5. Einrichtung nach einem der vorhergehenden Ansprüche, weiter einen Pulssequenzgenerator (5, 24) umfassend, der dazu eingerichtet ist, die Pulssignalsequenz zu generieren.

6. Einrichtung nach Anspruch 5, weiter einen Pulsfenstergenerator (11) umfassend, der basierend auf einem Pulssignal ein Pulsfenster generiert.

7. Einrichtung nach Anspruch 1, **dadurch gekennzeichnet, dass** die Überwachungsschaltung (22) einen Energieberechner (32) umfasst, der dazu eingerichtet ist, basierend auf dem Stromsignal und/oder Spannungssignal der Lichtquelle (21) einen elektrischen Energiewert zu berechnen.

8. Einrichtung nach Anspruch 7, weiter einen Temperaturkompensator (36) umfassend, der dazu eingerichtet ist, die emittierte Lichtleistung basierend auf dem elektrischen Energiewert und einem Betriebstemperaturwert der Lichtquelle (21) zu korrigieren.

9. Einrichtung nach Anspruch 8, wobei die Lichtquelle (21) einen Temperatursensor (35) umfasst, der den Betriebstemperaturwert der Lichtquelle (21) an den Temperaturkompensator (36) ausgibt.

10. Einrichtung nach einem der vorhergehenden Ansprüche, weiter einen Messwiderstand (8, 27) umfassend, der ein Spannungsabtastsignal basierend auf einem Stromsignal der Lichtquelle (2, 21) ausgibt.

11. Einrichtung nach Anspruch 10, weiter einen Differenzverstärker (9, 28) umfassend, der das Spannungsabtastsignal des Messwiderstands (8, 27) verstärkt.

12. Einrichtung nach Anspruch 11, weiter einen Komparator (10, 29) umfassend, der das Spannungsabtastsignal mit einem Referenzwert vergleicht und darauf basierend ein Statussignal der Lichtquelle (2, 21) an die Überwachungsschaltung (3, 22) ausgibt.

13. Einrichtung nach einem der vorhergehenden Ansprüche, **dadurch gekennzeichnet, dass** die Überwachungsschaltung (3, 22) eine Fehler-Logik (15, 34) umfasst, die dazu eingerichtet ist, basierend auf der Überwachung der von der Lichtquelle (2, 21) emittierten Lichtleistung die Lichtquelle (2, 21) zu deaktivieren.

## Claims

1. Device (1, 20) for operating a light source (2, 21) for optical time-of-flight measurement, comprising:
a light source (2, 21) which is configured to emit light pulses according to a pulse signal sequence; and
a monitoring circuit (3, 22) for monitoring light output emitted by the light source (2, 21) based on a current signal and/or voltage signal of the light source (2, 21),
wherein the monitoring circuit (3, 22) is configured to deactivate or not activate the light source (2, 21) when the emitted light output exceeds a threshold value,
**characterized in that**
the monitoring circuit (22) comprises a first converter (30) for time-correlated sampling of the current signal from the light source (21) and a second converter (31) for time-correlated sampling of the voltage signal from the light source (21).

2. Device according to claim 1, **characterized in that** the monitoring circuit (3) comprises an on-time monitor (12) which is configured to monitor whether the continuous on-time of the light source (2) is less than a predetermined on-time threshold.

3. Device according to claim 1 or 2, **characterized in that** the monitoring circuit (3) comprises a duty cycle monitor (13) which is configured to monitor whether a duty cycle of the light pulses is smaller than a predetermined duty cycle threshold value.

4. Device according to one of the preceding claims, **characterized in that** the monitoring circuit (3) comprises a window monitor (14) which is configured to monitor whether the light source (2) is activated outside the pulse sequence.

5. Device according to one of the preceding claims, further comprising a pulse sequence generator (5, 24) which is configured to generate the pulse signal sequence.

6. Device according to claim 5, further comprising a pulse window generator (11) which is configured to generate a pulse window based on a pulse signal.

7. Device according to claim 1, **characterized in that** the monitoring circuit (22) comprises an energy calculator (32) which is configured to calculate an electrical energy value based on the current signal and/or voltage signal of the light source (21).

8. Device according to claim 7, further comprising a temperature compensator (36) which is configured to correct the emitted light output based on the electrical energy value and an operating temperature value of the light source (21).

9. Device according to claim 8, wherein the light source (21) comprises a temperature sensor (35) that outputs the operating temperature value of the light source (21) to the temperature compensator (36).

10. Device according to one of the preceding claims, further comprising a measuring resistor (8, 27) that outputs a voltage sampling signal based on a current signal of the light source (2, 21).

11. Device according to claim 10, further comprising a differential amplifier (9, 28) that amplifies the voltage sampling signal of the measuring resistor (8, 27).

12. Device according to claim 11, further comprising a comparator (10, 29) which compares the voltage sampling signal with a reference value and, based thereon, outputs a status signal of the light source (2, 21) to the monitoring circuit (3, 22).

13. Device according to one of the preceding claims, **characterized in that** the monitoring circuit (3, 22) comprises an error logic (15, 34) which is configured to deactivate the light source (2, 21) based on the monitoring of the light output emitted by the light source (2, 21).

## Revendications

1. Dispositif (1, 20) destiné à faire fonctionner une source lumineuse (2, 21) pour la mesure optique du temps de propagation, comprenant :
une source lumineuse (2, 21) agencée pour émettre des impulsions lumineuses selon une séquence de signaux d'impulsion ; et
un circuit de surveillance (3, 22) destiné à surveiller une puissance lumineuse émise par la source lumineuse (2, 21) sur la base d'un signal de courant et/ou d'un signal de tension de la source lumineuse (2, 21),
le circuit de surveillance (3, 22) étant conçu pour désactiver ou ne pas activer la source lumineuse (2, 21) lorsque la puissance lumineuse émise dépasse une valeur seuil,
**caractérisé en ce que**
le circuit de surveillance (22) comprend un premier convertisseur (30) destiné à échantillonner de manière corrélée dans le temps le signal de courant provenant de la source lumineuse (21) et un deuxième convertisseur (31) destiné à échantillonner de manière corrélée dans le temps le signal de tension provenant de la source lumineuse (21).

2. Dispositif selon la revendication 1, **caractérisé en ce que** le circuit de surveillance (3) comprend un moniteur de temps d'activation (12) qui est agencé pour surveiller si le temps d'activation continu de la source lumineuse (2) est inférieur à une valeur seuil de temps d'activation prédéfinie.

3. Dispositif selon la revendication 1 ou 2, **caractérisé en ce que** le circuit de surveillance (3) comprend un moniteur de rapport cyclique (13) qui est agencé pour surveiller si un rapport cyclique des impulsions lumineuses est inférieur à une valeur seuil de rapport cyclique prédéfinie.

4. Dispositif selon l'une des revendications précédentes, **caractérisé en ce que** le circuit de surveillance (3) comprend un moniteur de fenêtre (14) qui est agencé pour surveiller si la source lumineuse (2) est activée en dehors de la séquence d'impulsions.

5. Dispositif selon l'une des revendications précédentes, comprenant en outre un générateur de séquence d'impulsions (5, 24) qui est agencé pour générer la séquence de signaux d'impulsion.

6. Dispositif selon la revendication 5, comprenant en outre un générateur de fenêtre d'impulsion (11) qui génère une fenêtre d'impulsion sur la base d'un signal d'impulsion.

7. Dispositif selon la revendication 1, **caractérisé en ce que** le circuit de surveillance (22) comprend un calculateur d'énergie (32) qui est agencé pour calculer une valeur d'énergie électrique sur la base du signal de courant et/ou du signal de tension de la source lumineuse (21).

8. Dispositif selon la revendication 7, comprenant en outre un compensateur de température (36) qui est agencé pour corriger la puissance lumineuse émise sur la base de la valeur d'énergie électrique et d'une valeur de température de fonctionnement de la source lumineuse (21).

9. Dispositif selon la revendication 8, dans lequel la source lumineuse (21) comprend un capteur de température (35) qui transmet la valeur de température de fonctionnement de la source lumineuse (21) au compensateur de température (36).

10. Dispositif selon l'une des revendications précédentes, comprenant en outre une résistance de mesure (8, 27) qui transmet un signal de détection de tension sur la base d'un signal de courant de la source lumineuse (2, 21).

11. Dispositif selon la revendication 10, comprenant en outre un amplificateur différentiel (9, 28) qui amplifie le signal de détection de tension de la résistance de mesure (8, 27).

12. Dispositif selon la revendication 11, comprenant en outre un comparateur (10, 29) qui compare le signal de détection de tension à une valeur de référence et, sur cette base, délivre un signal d'état de la source lumineuse (2, 21) au circuit de surveillance (3, 22).

13. Dispositif selon l'une des revendications précédentes, **caractérisé en ce que** le circuit de surveillance (3, 22) comprend une logique d'erreur (15, 34) qui est agencée pour désactiver la source lumineuse (2, 21) sur la base de la surveillance de la puissance lumineuse émise par la source lumineuse (2, 21).
